# EUROPÄISCHE PATENTSCHRIFT

(11) **EP 2 490 849 B1**
(45) Veröffentlichungstag und Bekanntmachung des Hinweises auf die Patenterteilung: **29.05.2013**
(21) Anmeldenummer: 10745606.3
(22) Anmeldetag: 23.08.2010
(51) Int. Cl.: B23D 49/16

(54) **WERKZEUGMASCHINE**
MACHINE TOOL
MACHINE-OUTIL

(30) Priorität: 04.11.2009 DE 102009046374; 23.10.2009 DE 102009045954
(43) Veröffentlichungstag der Anmeldung: 29.08.2012
(73) Patentinhaber: Robert Bosch GmbH, 70442 Stuttgart (DE)
(72) Erfinder: BANTLE, Florian, 73344 Gruibingen (DE); CASOTA, Marcel, CH-4460 Gelterkinden (CH); KRUCKER, Mario, CH-9200 Gossau (CH)
(86) Internationale Anmeldenummer: PCT/EP2010/062208
(87) Internationale Veröffentlichungsnummer: WO 2011/047904

(56) Entgegenhaltungen:
- EP-A1- 1 598 136
- EP-A2- 1 188 505

## Beschreibung

Die Erfindung betrifft eine Werkzeugmaschine, insbesondere eine elektromotorisch angetriebene Stichsäge, gemäß dem Oberbegriff des Anspruches 1. Eine solche Werkzeugmaschine ist der EP 1 598 136 B1 zu entnehmen.

### Stand der Technik

Werkzeugmaschinen in Form von Stichsägen mit hubbeweglich angetriebenem Sägeblatt, die in mehreren Betriebsweisen zu betreiben sind, sind in verschiedenen Ausgestaltungen bekannt. So beispielsweise aus der DE 37 02 670 A1 oder der EP 1 598 136 B1, bei denen im sogenannten Scrolling-Modus eine Verdrehbarkeit des hubbeweglich angetriebenen Sägeblattes um eine zur Hubachse parallele Drehachse gegeben ist und bei denen am Sägeblatt ein Kulissenkörper mit quer zur Hubachse verlaufender Führungskulisse vorgesehen ist, in die der Kurbelzapfen einer unabhängig vom Sägeblatt gelagerten Kurbe!scheibe eingreift. Mit der jeweiligen Drehstellung des Sägeblattes ändert sich die Lage der Führungskulisse zum Kurbelzapfen, was zwischen diesen Teilen ein gewisses Spiel bedingt. Zudem schränkt eine derartige Lösung auch den konstruktiven Spielraum hinsichtlich des Drehantriebs für die Verdrehung des Sägeblattes um seine Hubachse ein.

Für Werkzeugmaschinen in Form von Stichsägen, die keine Verdrehbarkeit des Sägeblattes um dessen jeweilige Hubachse vorsehen, ist es des Weiteren aus der EP 1 188 505 B1 bekannt, den die Führungskulisse enthaltenden Kulissenkörper des als Kreuzschubkurbeltrieb gestalteten Hubantriebes für das Sägeblatt in der Hubebene des Sägeblattes gehäuseseitig geführt anzuordnen, bei hiervon unabhängiger gehäuseseitiger Lagerung der Kurbelscheibe, die den in die Führungskulisse eingreifenden Kurbelzapfen trägt.

### Offenbarung der Erfindung

Der Erfindung liegt die Aufgabe zugrunde, eine insbesondere als Stichsäge ausgebildete Werkzeugmaschine mit hubbeweglich angetriebenen und drehbar anzutreibendem Arbeitswerkzeug kompakt auszubilden und trotzdem günstige Zugriffsmöglichkeiten auf das Werkzeug zu dessen Drehverstellung sowie eine exakte und stabile Führung des Werkzeuges ohne Beeinträchtigung des Hubantriebes trotz der drehverstellbaren Führung zu gewährleisten.

Erreicht wird dies erfindungsgemäß mit den Merkmalen des Anspruches 1. Die weiteren Ansprüche beinhalten zweckmäßige Ausgestaltungen.

Dadurch, dass das Arbeitswerkzeug drehbar über ein Führungsjoch gehalten ist, das seinerseits in Hubrichtung des Arbeitswerkzeuges verschieblich gehäuseseitig geführt ist, ist erfindungsgemäß die Möglichkeit geschaffen, abgestützt zum Führungsjoch und ebenenversetzt zu diesem unabhängig vom Arbeitswerkzeug den Führungskörper mit der Führungskulisse anzuordnen, in die der Kurbelzapfen des Kreuzschubkurbeltriebs eingreift, über den das Arbeitswerkzeug hubbeweglich anzutreiben ist. Die tragende Abstützung des Kulissenkörpers des Kreuzschubkurbeltriebes über das Führungsjoch gegen das Gehäuse vermeidet unerwünschte Antriebseinflüsse auf das hubbeweglich angetriebene Arbeitswerkzeug ebenso wie entsprechende Rückwirkungen vom Arbeitswerkzeug auf den Kreuzschubkurbeltrieb, die die angestrebte, möglichst spielfreie Hubführung für das Arbeitswerkzeug und eine entsprechend spielfreie Arbeitsweise des Kreuzschubkurbeltriebs beeinflussen könnten. Weiter wird durch diese Ausgestaltung die Verdrehbarkeit des Arbeitswerkzeuges nicht nur in baulich günstiger Weise ermöglicht, sondern auch ohne Rückwirkungen auf den über den Kreuzschubkurbeltrieb erfolgenden Antrieb des Arbeitswerkzeuges.

Bei der erfindungsgemäßen Ausgestaltung können das Führungsjoch und der Kulissenkörper drehfest aufeinander abgestützt, gegebenenfalls auch einstückig ausgebildet sein, so dass auch für den Kulissenkörper trotz des Ebenenversatzes zum Führungsjoch letztlich eine quasi unmittelbare Abstützung zum Gehäuse gegeben ist.

Als besonders zweckmäßig erweist sich aber eine Ausgestaltung, bei der das Führungsjoch und der Kulissenkörper um die Hubachse des Arbeitswerkzeuges, ungeachtet der gegebenen axialen Abstützung in Hubrichtung, drehbeweglich aufeinander abgestützt sind, so dass eine um die Drehachse entkoppelte Führung des Kulissenkörpers über das Führungsjoch realisiert ist.

In besonders einfacher Weise lässt sich dies dadurch gestalten, dass der Kulissenkörper über einen Ausleger mit dem Führungsjoch verbunden ist, wobei das Führungsjoch bevorzugt zwischen Gabelarmen des Auslegers in Hubrichtung abgestützt ist und die Drehbeweglichkeit über einen Drehbolzen erreicht wird, der um die Hubachse des Arbeitswerkzeuges drehbar Kulissenkörper und Führungsjoch verbindet und zugleich die um die Hubachse drehbare Verbindung des Arbeitswerkzeuges zum Führungsjoch bildet.

Damit wird praktisch ohne Zusatzaufwand die Drehbarkeit des Arbeitswerkzeuges realisiert, wobei der Drehbolzen auch besonders günstige Voraussetzungen für den Zugriff des für das Arbeitswerkzeug notwendigen Drehantriebs auf das Arbeitswerkzeug bietet. Dies auch bei Werkzeugmaschinen, die als Stichsägen gestaltet sind und bei denen das als Arbeitswerkzeug dienende, hubbeweglich angetriebene Sägeblatt im sogenannten Pendelhubbetrieb in Richtung der Sägeblattebene verschwenkbar überlagert zum Hubantrieb angetrieben ist, da bei einer solchen Ausgestaltung die erforderliche, quer zur Hubachse schwenkbare Abstützung des Arbeitswerkzeuges, oder einer das Arbeitswerkzeug tragenden Hubstange, über eine entsprechende Schwenkverbindung, etwa einen Schwenkbolzen unmittelbar am Drehbolzen angelenkt sein kann.

Auch ein zum Führungsjoch axial beabstandeter Zugriff des Drehantriebes auf das Arbeitswerkzeug, insbesondere in dessen Ausgestaltung als Sägeblatt, lässt sich bei der geschilderten Grundkonstruktion in vorteilhafter Weise über eine zum Drehbolzen axial beabstandete Drehabstützung realisieren, die bevorzugt durch ein gehäuseseitig abgestütztes Lager gebildet ist, das eine bezogen auf die Verdrehbarkeit um die Hubachse abstützende Gleitführung für die Unrundquerschnitt, insbesondere Rechteckquerschnitt, aufweisende Hubstange aufweist. Im Hinblick auf eine zusätzliche Realisierung des Pendelantriebes ist diese Gleitführung bevorzugt als sich in Pendelrichtung erstreckende Langlochführung mit zur Hubstange gegebenem Übermaß in Pendelrichtung gestaltet.

Weitere Einzelheiten und Merkmale der Erfindung ergeben sich aus den Ansprüchen, den Ausführungsbeispielen und deren Beschreibung. Es zeigen:
- Fig. 1: eine perspektivische und auf den Grundaufbau für Antrieb und Führung des Arbeitswerkzeuges beschränkte, schematisierte Darstellung einer als Stichsäge ausgestalteten Werkzeugmaschine,
- Fig. 2 und 3: weitere Ansichten zur Darstellung gemäß Fig. 1, und
- Fig. 4: eine im Wesentlichen der Fig. 1 entsprechende Schemadarstellung, die ergänzend eine mögliche Ausgestaltung einer auf den Drehbolzen zugreifenden Antriebsverbindung des Drehantriebes für das Arbeitswerkzeug zeigt.

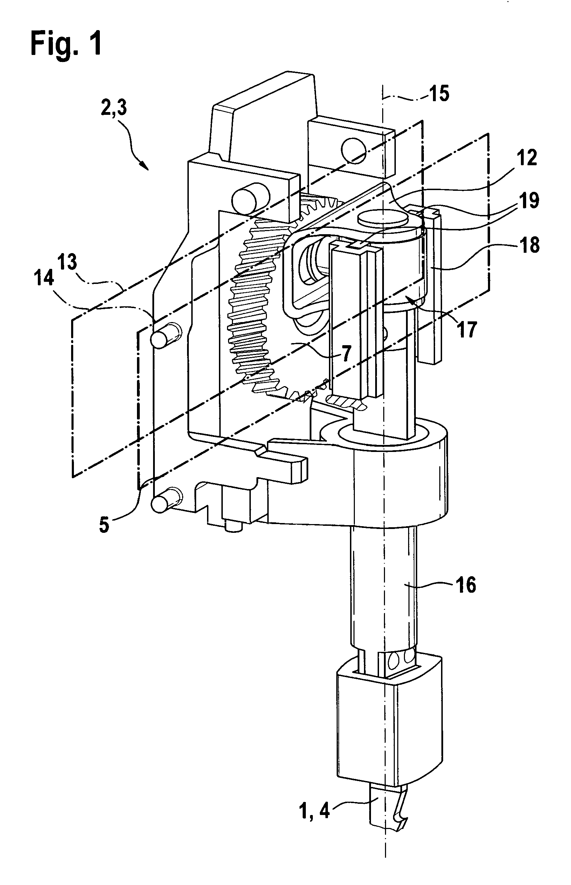

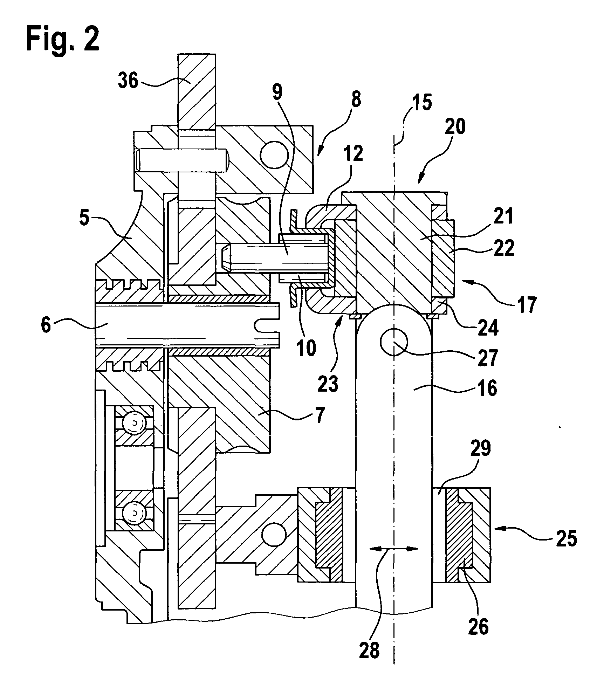

Die Fig. 1 bis 4 veranschaulichen, auf das Wesentliche reduziert, Antrieb und Führung für das Arbeitswerkzeug 1 einer Werkzeugmaschine 2, die als Stichsäge 3 ausgebildet ist und die als Arbeitswerkzeug 1 ein Stichsägeblatt 4 aufweist. In Verbindung mit dem grundsätzlich bekannten Aufbau von Stichsägen hat man sich die in den Figuren dargestellte Lösung für Antrieb und Führung eingebettet in den Aufbau der Stichsäge vorzusteilen, der über eine Fußplatte zum Werkstück abgestützt ist und bei dem Antrieb und Führung für das Arbeitswerkzeug im gehäuseseitig umschlossenen, bezogen auf die Arbeitsrichtung vorderen Teil des Maschinengehäuses angeordnet sind, wie dies beispielsweise auch die eingangs zum Stand der Technik genannten Druckschriften zeigen.

Bezogen auf eine solche Gestaltung gehen die Darstellungen gemäß Fig. 1 bis 4 von einem mit einem nicht dargestellten Gehäuse verbundenen Tragrahmen 5 aus, gegen den über einen Lagerzapfen 6 die Kurbelscheibe 7 eines Kreuzschubkurbeltriebes 8 abgestützt ist, dessen Kurbelzapfen 9 ein Lager 10 trägt und über dieses Lager 10 in die Führungskulisse 11 eines Kulissenkörpers 12 eingreift. Der Kulissenkörper 12 mit der Führungskulisse 11 erstreckt sich in einer Ebene 13, die richtungsgleich zu einer Ebene 14 verläuft, in der sich die Hubachse 15 des das Arbeitswerkzeug 1 bildenden Sägeblattes 4 erstreckt, wobei die Ebene 13 quer zur Hubachse 15 versetzt liegt. Dem Massenausgleich dient ein auf einem exzentrischen Bund der Kurbelscheibe 7 angeordnetes, im Übergang vom Tragrahmen 5 auf die Kurbelscheibe 7 liegendes scheibenförmiges Ausgleichsgewicht 36.

In der Verbindung des Stichsägeblattes 4 zum Kreuzschubkurbeltrieb 8 ist im Ausführungsbeispiel eine in Richtung der Hubachse 15 verlaufende Hubstange 16 vorgesehen, die in bekannter Weise einerseits in einer Aufnahme für das jeweilige Sägeblatt 4 ausläuft und andererseits gegen ein Führungsjoch 17 abgestützt und über dieses Führungsjoch 17 in Richtung der Hubebene 14 verschieblich geführt zum Gehäuse festgelegt ist. Die Führung gegenüber dem Gehäuse erfolgt über gehäuseseitig abgestützte Schiebeführungen 18, in denen das Führungsjoch 17 über seitlich auskragende Ansätze 19 läuft, zwischen denen die zentrale Abstützung 20 der Hubstange 16, und damit des Sägeblattes 4 zum Führungsjoch 17 liegt. Die zentrale Abstützung 20 ist im Ausführungsbeispiel durch einen Drehbolzen 21 gebildet, der das Führungsjoch 17 in einer zentralen, in seinem Mittelteil 22 vorgesehenen Öffnung durchsetzt.

Im Ausführungsbeispiel erstreckt sich das Führungsjoch 17 mit seinen seitlich auskragenden Ansätzen 19 und den diese aufnehmenden Schiebeführungen 18 in der Hubebene 14, die parallel zur Hubebene 13 liegt, in der die Führungskulisse 11 des Kulissenkörpers verläuft. Der Kulissenkörper 12 ist mit einem den Abstand zwischen den Hubebenen 13 und 14 überbrückenden Aus!eger 23 versehen, gegen den das Führungsjoch 17 im Bereich seines Mittelteiles 22 abgestützt ist. Der Ausleger 23 wird durch zwei in Richtung der Hubachse 15 beabstandet liegende Gabelarme 24 gebildet, welche quer zur Erstreckungsrichtung der Führungskulisse 11 einander gegenüberliegend am Kulissenkörper 12 vorgesehen sind. Im Ausführungsbeispiel bilden der Kulissenkörper 12 und das Führungsjoch 17 voneinander getrennte Teile, die über den Drehbolzen 21 verbunden sind, der über die Hubstange 16 das Sägeblatt 4 trägt und in dessen Antrieb liegt. Grundsätzlich liegt es aber auch im Rahmen der Erfindung, das Führungsjoch 17 mit dem Kulissenkörper 12 einstückig zu verbinden.

Für die in der Verbindung des Drehbolzens 21 zum Sägeblatt 4 liegende Hubstange 16 ist beabstandet zum Führungsjoch 17 und in Richtung auf das Sägeblatt 4 versetzt eine zusätzlich lagernde Abstützung 25 gegen den Tragrahmen 5 vorgesehen. Die Abstützung 25 weist bevorzugt einen umschließend zur einen Unrundquerschnitt aufweisenden Hubstange 16 vorgesehenen Lagerkörper 26 auf, über den die Hubstange 16 in Hubrichtung wie auch quer zur Arbeitsebene des von der Hubstange 16 getragenen Sägeblattes 4, und damit auch quer zur Hubachse 15 geführt ist. Im Hinblick auf die Realisierung eines Pendelhubbetriebes, bei dem das Arbeitswerkzeug 1 in Form des Sägeblattes 4 zusätzlich in Sägerichtung pendelnd angetrieben ist, - der diesbezügliche Antrieb ist im Ausführungsbeispiel nicht dargestellt, kann aber in der aus dem Stand der Technik ersichtlichen Form erfolgen - ist die Hubstange 16 um eine quer zur Hubachse 15 verlaufende Schwenkachse 27 mit dem Drehbolzen 21 verbunden. Über das Lager 26 erfolgt die Querführung der zusätzlich zur Hubrichtung in Pendelrichtung 28 verstellbaren Hubstange bei einem Unrundprofil der Hubstange 16 mit parallel zur Pendelrichtung 28 verlaufenden Flanken über eine Langlochführung 29 im Lager 26, wobei die Langlochführung 29 in Pendelrichtung 28 zum Querschnitt der Hubstange 16 entsprechendes Übermaß aufweist.

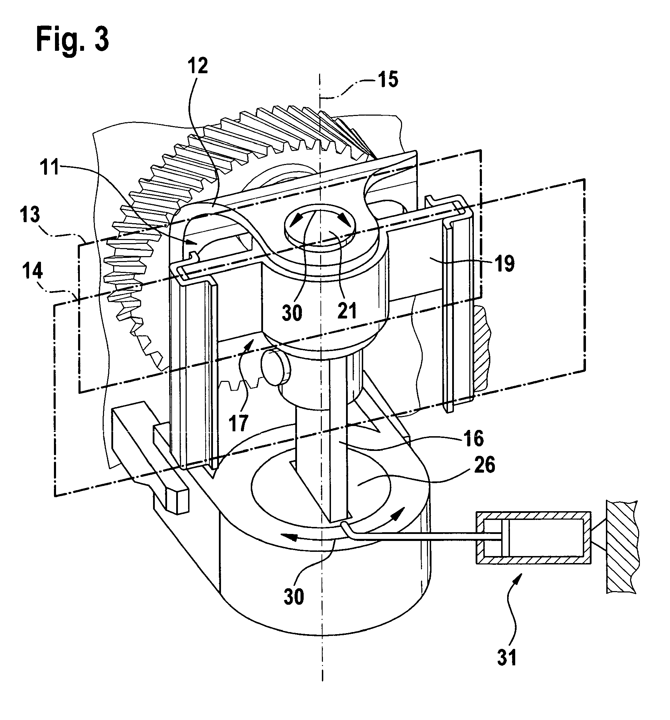

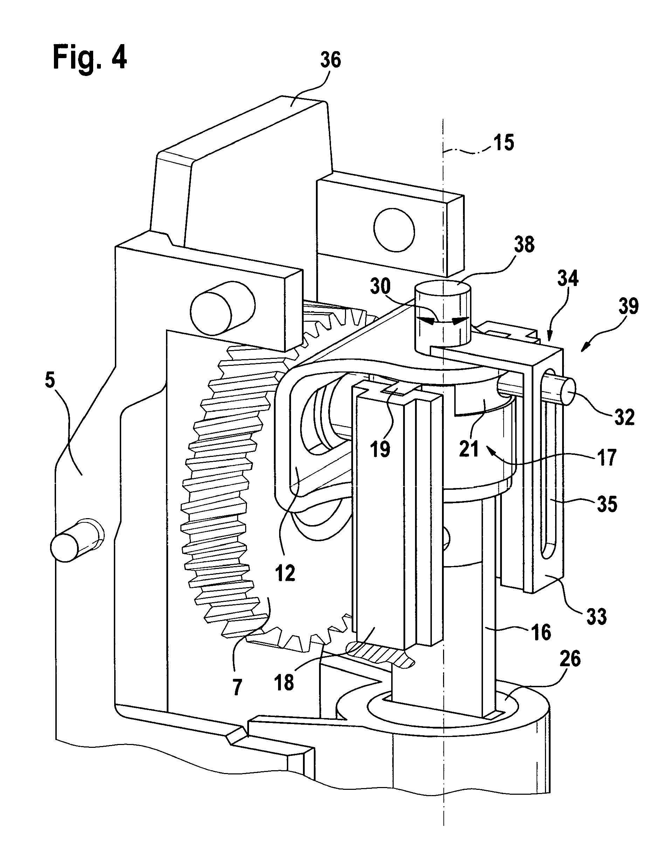

Der für die Verdrehung des Arbeitswerkzeuges 1, insbesondere in Form des Sägeblattes 4, erforderliche Drehantrieb, der in den Fig. 3 und 4 symbolisch über den Pfeil 30 angedeutet ist, kann bevorzugt am Drehbolzen 21 oder auch am Lager 26 angreifen, so dass insoweit bereits gegebene Bauteile auch zur Übertragung des über den Drehantrieb eingeleiteten Drehmomentes auf das Arbeitswerkzeug 1 genutzt werden können. Insbesondere der Drehbolzen 21 bietet vielfältige Möglichkeiten für den Angriff eines entsprechenden Drehantriebes.

Der Zugriff des Drehantriebes 30 auf das Lager 26 bietet zusätzliche Vorteile, da das Lager 26 unabhängig von der jeweiligen Hubstellung des Arbeitswerkzeuges 1 seine Lage zum Gehäuse zumindest im Wesentlichen beibehält, womit sich auch ein linearer Antrieb mit gehäuseseitiger Abstützung mit Vorteil nutzen lässt. In Fig. 3 ist eine diesbezügliche bauliche Lösung für einen Drehantrieb 30 schematisiert bei 31 angedeutet.

Der über den Pfeil 30 symbolisch angedeutete Drehantrieb setzt in der Ausgestaltung gemäß Fig. 4 als Drehantrieb 39 am Drehbolzen 21 an. Hierzu ist der Drehbolzen 21 mit einem seitlich auskragenden Hebelarm 32 versehen. Der Hebelarm 32 greift an einen koaxial zum Drehbolzen 21 festgelegten Dreharm 33 eines Verbindungsgliedes 34 an. Der Dreharm 33 erstreckt sich in Richtung der Hubachse 15 und weist eine in Richtung der Hubachse 15 verlaufende Kulisse 35 auf, so dass ein zum Gehäuse feststehender, nicht dargestellter Antrieb ungeachtet der Hubbewegung für den Drehantrieb des Arbeitswerkzeuges 1 verwendet werden kann. Das Ausführungsbeispiel gemäß Fig. 4 veranschaulicht, dass auch bei Zugriff des Drehantriebes auf den Drehbolzen 21 eine einfache Gestaltung der entsprechenden Antriebsverbindung möglich ist.

Ein auf das Verbindungsglied 34 wirkender, über den Pfeil 30 symbolisierter Drehantrieb kann allerdings auch an einem in Richtung der Hubachse 15 liegenden Antriebszapfen 38 des Verbindungsgliedes 34 angreifen, wobei ein zugehöriger Antriebsmotor in axialer Verlängerung des Antriebszapfens 38 feststehend bei axialer verschieblicher Verbindung zum Antriebszapfen 38 vorgesehen sein kann. Auch ein radialer Zugriff eines gehäuseseitig abgestützten Antriebes auf den Antriebszapfen ist möglich, so dass bei gleichem Grundaufbau unterschiedliche Antriebskonzepte 38 vorgesehen werden können.

## Patentansprüche

1. Werkzeugmaschine, insbesondere elektromotorisch angetriebene Stichsäge (3), mit einem um seine in einer Hubebene (14) liegende Hubachse (15) drehverstellbaren Arbeitswerkzeug (1), das in Hubrichtung über einen Kreuzschubkurbeltrieb (8) angetrieben ist, dessen Kurbelzapfen (9) in eine quer zur Hubachse (15) verlaufende Führungskulisse (11) eines zusammen mit dem Arbeitswerkzeug (1) in Erstreckungsrichtung der Hubachse (15) hubbeweglichen Kulissenkörpers (12) eingreift, dessen Führungskulisse (11) und die Hubachse (15) des Arbeitswerkzeuges (1) sich in zueinander versetzten, gleich ausgerichteten, insbesondere parallelen Hubebenen (13, 14) erstrecken, **dadurch gekennzeichnet, dass** das Arbeitswerkzeug (1) drehbar über ein Führungsjoch (17) gehalten ist, das den Kulissenkörper (12) mit der Führungskulisse (11) trägt und in Erstreckungsrichtung der die Hubachse (15) des Arbeitswerkzeuges (1) enthaltenden Hubebene (14) gehäuseseitig schiebegeführt ist.

2. Werkzeugmaschine nach Anspruch 1, **dadurch gekennzeichnet, dass** das Führungsjoch (17) und der Kulissenkörper (12) drehfest aufeinander abgestützt sind.

3. Werkzeugmaschine nach Anspruch 3, **dadurch gekennzeichnet, dass** das Führungsjoch (17) und der Kulissenkörper (12) getrennte Bauteile bilden oder einstückig ausgebildet sind.

4. Werkzeugmaschine nach Anspruch 1, **dadurch gekennzeichnet, dass** das Führungsjoch (17) und der Kulissenkörper (12) um die Hubachse (15) des Arbeitswerkzeuges (1) drehbeweglich aufeinander abgestützt sind.

5. Werkzeugmaschine nach einem der vorhergehenden Ansprüche, **dadurch gekennzeichnet, dass** der Kulissenkörper (12) über einen Ausleger (23) mit dem Führungsjoch (17) verbunden ist.

6. Werkzeugmaschine nach Anspruch 5, **dadurch gekennzeichnet, dass** das Führungsjoch (17) zwischen Gabelarmen (24) des Auslegers (23) des Kulissenkörpers (12) in Hubrichtung abgestützt ist.

7. Werkzeugmaschine nach Anspruch 4 bis 6, **dadurch gekennzeichnet, dass** das Arbeitswerkzeug (1), der Kulissenkörper (12) und das Führungsjoch (17) über einen Drehbolzen (21) um die Hubachse (15) des Arbeitswerkzeuges (1) drehbar verbunden und gegeneinander abgestützt sind.

8. Werkzeugmaschine nach einem der vorhergehenden Ansprüche, **dadurch gekennzeichnet, dass** das Arbeitswerkzeug (1) um eine quer zur Hubachse (15) verlaufende Schwenkachse (27) mit dem Drehbolzen (21) verbunden ist.

9. Werkzeugmaschine nach Anspruch 7 oder 8, **dadurch gekennzeichnet, dass** das Arbeitswerkzeug (1) über den Drehbolzen (21) in seiner Arbeitsrichtung einstellbar ist.

10. Werkzeugmaschine nach Anspruch 9, **dadurch gekennzeichnet, dass** der Drehantrieb (Pfeil 30) für das Arbeitswerkzeug (1) am Drehbolzen (21) angreift.

11. Werkzeugmaschine nach Anspruch 9 oder 10, **dadurch gekennzeichnet, dass** der Drehbolzen (21) mit einem seitlich versetzt zur Hubachse (15) liegenden und sich in Richtung der Hubachse (15) erstreckenden Dreharm (33) verbunden ist, an dem in Richtung der Hubachse (15) längsverschieblich kulissengeführt der Drehantrieb (39) angreift.

12. Werkzeugmaschine nach einem der vorhergehenden Ansprüche, **dadurch gekennzeichnet, dass** das Arbeitswerkzeug (1) in Richtung seiner Hubachse (15) versetzt zum Führungsjoch (17) hubbeweglich in einem Drehlager (26) geführt ist, an dem der Drehantrieb (Pfeil 30) für das Arbeitswerkzeug (1) angreift.

## Claims

1. Power tool, in particular a jigsaw (3) driven by an electric motor, having a work tool (1) that is rotationally adjustable about its stroke axis (15) located in a stroke plane (14), said work tool (1) being driven in the stroke direction via a Scotch-yoke crank mechanism (8), the crank pin (9) of which engages in a slotted guide link (11), extending transversely to the stroke axis (15), of a slotted-link body (12) that is movable in a reciprocating manner together with the work tool (1) in the direction of extent of the stroke axis (15), the slotted guide link (11) of said slotted-link body (12) and the stroke axis (15) of the work tool (1) extending in mutually offset, identically oriented, in particular parallel stroke planes (13, 14), **characterized in that** the work tool (1) is held in a rotatable manner via a guide yoke (17) which carries the slotted-link body (12) having the slotted guide link (11) and is guided in a sliding manner on the housing side in the direction of extent of the stroke plane (14) containing the stroke axis (15) of the work tool (1).

2. Power tool according to Claim 1, **characterized in that** the guide yoke (17) and the slotted-link body (12) are supported in a rotationally locked manner on one another.

3. Power tool according to Claim 1, **characterized in that** the guide yoke (17) and the slotted-link body (12) form separate components or are formed integrally.

4. Power tool according to Claim 1, **characterized in that** the guide yoke (17) and the slotted-link body (12) are supported on one another in a rotatable manner about the stroke axis (15) of the work tool (1).

5. Power tool according to one of the preceding claims, **characterized in that** the slotted-link body (12) is connected to the guide yoke (17) via a cantilever (23).

6. Power tool according to Claim 5, **characterized in that** the guide yoke (17) is supported in the stroke direction between fork arms (24) of the cantilever (23) of the slotted-link body (12).

7. Power tool according to Claims 4 to 6, **characterized in that** the work tool (1), the slotted-link body (12) and the guide yoke (17) are connected rotatably about the stroke axis (15) of the work tool (1) via a pivot pin (21) and are supported against one another.

8. Power tool according to one of the preceding claims, **characterized in that** the work tool (1) is connected to the pivot pin (21) about a pivot axis (27) that extends transversely to the stroke axis (15).

9. Power tool according to Claim 7 or 8, **characterized in that** the work position of the work tool (1) is settable via the pivot pin (21).

10. Power tool according to Claim 9, **characterized in that** the rotary drive (arrow 30) for the work tool (1) acts on the pivot pin (21).

11. Power tool according to Claim 9 or 10, **characterized in that** the pivot pin (21) is connected to a rotary arm (33) that is located in a manner offset laterally with respect to the stroke axis (15) and extends in the direction of the stroke axis (15), the rotary drive (39) acting on said rotary arm (33) in a longitudinally displaceable manner in the direction of the stroke axis (15) in a manner guided by a slotted link.

12. Power tool according to one of the preceding claims, **characterized in that** the work tool (1) is guided in a reciprocating manner in the direction of its stroke axis (15) in a manner offset to the guide yoke (17) in a rotary bearing (26) on which the rotary drive (arrow 30) for the work tool (1) acts.

## Revendications

1. Machine-outil, en particulier scie sauteuse (3) entraînée par un moteur électrique, comprenant un outil de travail (1) réglable en rotation autour de son axe de levage (15) situé dans un plan de levage (14), lequel outil de travail est entraîné dans la direction de levage par le biais d'une commande à bielle manivelle (8) dont le maneton de bielle (9) vient en prise dans une coulisse de guidage (11), s'étendant transversalement à l'axe de levage (15), d'un corps de coulisse (12) levable conjointement avec l'outil de travail (1) dans la direction d'étendue de l'axe de levage (15), dont la coulisse de guidage (11) et l'axe de levage (15) de l'outil de travail (1) s'étendent dans des plans de levage (13, 14) décalés l'un par rapport à l'autre, orientés dans la même direction, en particulier parallèles, **caractérisée en ce que** l'outil de travail (1) est maintenu rotatif par le biais d'un étrier de guidage (17) qui porte le corps de coulisse (12) avec la coulisse de guidage (11) et qui est guidé à coulissement du côté du boîtier dans la direction d'étendue du plan de levage (14) contenant l'axe de levage (15) de l'outil de travail (1).

2. Machine-outil selon la revendication 1, **caractérisée en ce que** l'étrier de guidage (17) et le corps de coulisse (12) sont supportés l'un sur l'autre de manière solidaire en rotation.

3. Machine-outil selon la revendication 1, **caractérisée en ce que** l'étrier de guidage (17) et le corps de coulisse (12) forment des composants séparés ou sont réalisés d'une seule pièce.

4. Machine-outil selon la revendication 1, **caractérisée en ce que** l'étrier de guidage (17) et le corps de coulisse (12) sont supportés l'un sur l'autre de manière mobile en rotation autour de l'axe de levage (15) de l'outil de travail (1).

5. Machine-outil selon l'une quelconque des revendications précédentes, **caractérisée en ce que** le corps de coulisse (12) est connecté par le biais d'un bras en porte-à-faux (23) à l'étrier de guidage (17).

6. Machine-outil selon la revendication 5, **caractérisée en ce que** l'étrier de guidage (17) est supporté dans la direction de levage entre des bras de fourche (24) du bras en porte-à-faux (23) du corps de coulisse (12).

7. Machine-outil selon les revendications 4 à 6, **caractérisée en ce que** l'outil de travail (1), le corps de coulisse (12) et l'étrier de guidage (17) sont connectés de manière rotative autour de l'axe de levage (15) de l'outil de travail (1) et sont supportés l'un contre l'autre par le biais d'une goupille (21).

8. Machine-outil selon l'une quelconque des revendications précédentes, **caractérisée en ce que** l'outil de travail (1) est connecté à la goupille (21) autour d'un axe de pivotement (27) s'étendant transversalement à l'axe de levage (15).

9. Machine-outil selon la revendication 7 ou 8, **caractérisée en ce que** l'outil de travail (1) peut être ajusté dans sa direction de travail par le biais de la goupille (21).

10. Machine-outil selon la revendication 9, **caractérisée en ce que** l'entraînement en rotation (flèche 30) pour l'outil de travail (1) vient en prise sur la goupille (21).

11. Machine-outil selon la revendication 9 ou 10, **caractérisée en ce que** la goupille (21) est connectée avec un bras pivotant (33) situé de manière décalée latéralement par rapport à l'axe de levage (15) et s'étendant dans la direction de l'axe de levage (15), sur lequel vient en prise l'entraînement en rotation (39) guidé sur coulisse et déplaçable longitudinalement dans la direction de l'axe de levage (15).

12. Machine-outil selon l'une quelconque des revendications précédentes, **caractérisée en ce que** l'outil de travail (1) est guidé dans la direction de son axe de levage (15) de manière décalée par rapport à l'étrier de guidage (17) suivant un mouvement de levage dans un palier pivotant (26), sur lequel vient en prise l'entraînement en rotation (flèche 30) pour l'outil de travail (1).
